# EUROPEAN PATENT APPLICATION

(11) **EP 4 092 601 A1**
(43) Date of publication of application: **23.11.2022**
(21) Application number: 21200799.1
(22) Date of filing: 04.10.2021
(51) Int. Cl.: G06Q 30/06, G06Q 50/04

(54) **METHOD FOR MAKING ARTICLES INTENDED FOR JEWELLERY SHOPS ACCORDING TO A USER'S PREFERENCES**

(30) Priority: 17.05.2021 IT 202100012602
(71) Applicant: Gioielleria Italiana Società a Responsabilità Limitata, 17012 Albissola Marina SV (IT)
(72) Inventor: Mangini, Francesco, 17012 Albissola Marina SV (IT)
(74) Representative: Perani & Partners S.p.A.

(57) **Abstract**

Method (1) for making an article intended for jewellery shops according to a user's preferences, the method (1) comprising the steps of a) providing a list of articles that can be selected and customised by a user; b) providing a list of suppliers of articles; c) providing a management algorithm residing in a central processing unit configured to subdivide the realisation of an article according to the article and its customisation to one or more suppliers from the list of suppliers; d) selecting and customising an article from the list of articles by means of a user interface in communication with the central processing unit; e) subdividing, by means of the management algorithm, the selected and customised article into one or more production components and/or one or more production processes; f) defining a production line for the selected article according to the production components and the production processes and the suppliers in the list of suppliers; g) selecting one or more suppliers from the list of suppliers according to the defined production line; h) sending a job signal to each selected supplier representative of the production component to be made and/or the production process to be carried out according to the production line; i) making the production components and the production processes according to the defined production line; 1) assembling the production components to produce the selected article in an assembly centre.

## Description

### Technical Field

The present invention relates to a method for making articles for jewellery shops according to a user's preferences in the e-commerce and marketplace field. Preferably, the method is applied to shops selling jewellery articles such as jewellery shops.

### State of the Art

It is known from the state of the art for a jeweller to commission one or more customised or standard jewellery articles from an online platform or a supplier's printed catalogue. Specifically, it is known to establish a cooperation contract between a jewellery shop and a supplier so that, if necessary, the jeweller can order a standard or customised jewellery article from the given supplier. Once the article has been selected, the jeweller commissions the article from the relative supplier, who takes care of producing it and delivers it to the relative jeweller.

The article production process consists in the traditional steps carried out by the selected supplier of ordering components, processing and assembling them .

### Problems of the Prior Art

The known methods of commissioning and producing a jewellery article have a number of disadvantages mainly related to slow production and lack of control over the article produced, as well as over the coordination in the production thereof.

### Object of the Invention

Object of the present invention is to realise a method for producing articles intended for jewellery shops according to a user's preferences that are able to overcome the above-mentioned drawbacks of the prior art.

In particular, it is an object of the present invention to provide a method for making and distributing articles for jewellery shops which is able to optimise the production process of the relative articles.

The specified technical task and the specified purposes are substantially achieved by a method for making articles intended for jewellery shops according to a user's preferences comprising the technical characteristics set forth in one or more of the appended claims.

### Advantages of the invention

Advantageously, the method according to the present invention allows to optimise the steps for producing a jewellery article.

Advantageously, the method according to the present invention allows to constantly monitor the production steps of the jewellery article.

### BRIEF DESCRIPTION OF THE DRAWINGS

Further features and advantages of the present invention will appear more apparent from the indicative, and therefore non-limiting, description of a preferred, but not exclusive embodiment of a method for making articles for jewellery shops according to a user's preferences as illustrated in the accompanying drawings:

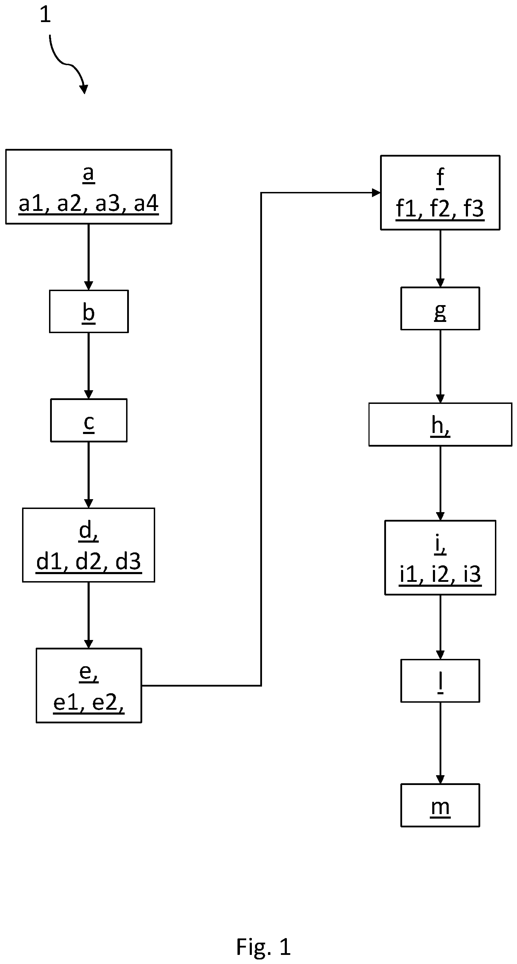

- figure 1 shows a block diagram of the method for making articles intended for jewellery shops according to a user's preferences according to an embodiment of the present invention.

### DETAILED DESCRIPTION

Even when not explicitly highlighted, the individual features described with reference to the specific embodiments must be considered as accessories and/or exchangeable with other features, described with reference to other embodiments.

The present invention relates to a method for making an article intended for jewellery shops according to a user's preferences, preferably according to a jeweller's preferences. The method is overall referred to by 1 in figure 1.

The method is applicable to any type of jewellery shop and to the realisation of any article intended for jewellery shops.

The method 1 object of the present invention is configured to coordinate, by distributing over several suppliers, the realisation of one or more articles according to the preferences expressed by the users in such a way as to control the realisation and optimise it as well as speed up the delivery time.

The method 1 object of the present invention comprises a number of steps as set forth below and schematically reported in the block diagram of figure 1.

The method includes a step a) of providing a list of articles that can be selected and customised by a user. The list of articles can be uploaded to a central processing unit, preferably to a database associated thereto, so that it can be managed by a management algorithm as explained hereinafter. This list of articles is constantly updated taking into account the preferences of users. It should be noted that for the purposes of the present invention, users may be understood to mean jewellers intending to place a purchase order for one or more jewellery articles.

According to a preferred embodiment, step a) comprises the steps a1) of providing a list of articles. Preferably, the list of articles may comprise jewellery articles, goldsmiths articles, silverware, costume jewellery, watchmaking articles, packaging, displays and warranties.

Specifically, step a) comprises a further step a2) of providing a list of categories for each article in the list of articles. Preferably, for jewellery, silverware and costume jewellery articles, step a2) includes providing, for example, the following categories of rings, pendants, necklaces, earrings, bracelets, anklets, cuff links, brooches. As regards watchmaking articles, step a2) includes, for instance, providing respectively the automatic, time only, chronograph, diver, technical categories. As regards displays, step a2) includes providing for example, displays for rings, bracelets, parures, earrings, for kits of several jewels, for complete lines. Finally, step a2) includes providing for packaging articles, the following categories as cardboard boxes, wooden boxes, jewellery rolls, gift boxes, chests of drawers.

Preferably, step a) includes a further step a3) of providing a list of sub-categories for each category in the list of categories that can be selected by a user. These sub-categories are known to the person skilled in the art. Some examples of sub-categories are reported hereinafter:
- sub-category for the ring category: solitaire, eternity or lapel, trilogy, with centre stone and surround, wedding band, 5-stone band, 7-stone band;
- sub-category for the bracelet category: tennis bracelets, bracelets with pendant, parure bracelets, bracelets with initials;
- sub-category for the earrings category: light point earrings, dangling earrings, stud earrings, earrings with centre stone and surround, pearl earrings.

More preferably, step a) includes a further step a4) of providing a list of user-selectable specifications for each article. Specifications may include gold colour, colour and purity of the diamond, type and quality of the gemstone and engraving of a logo or initials or other. In addition, especially for jewellery articles, the specifications also allow to select the carat of the stones to be set in the jewel, the size in cm of the bracelets, the size of the ring, the type and weight of the chain for necklaces, and the type and weight of the earrings back clasps.

It should be noted that each article in the list of articles is configurable according to the article itself and the categories, sub-categories, and specifications associated thereto. In other words, each article in the list of articles can be customised at different levels depending on the article.

The method 1 comprises a step b) of providing a list of suppliers of articles. In this case as well, the list of suppliers of articles is provided to the central processing unit, preferably stored in the database. Specifically, step b) includes a registration by suppliers through a supplier interface, e.g. comprising a web platform or application accessible via a fixed (computer) or mobile device (smartphone or tablet) by the supplier. It should be noted that the registration step by the supplier can also take place by means of Smart Contracts known in the prior art. Performing the registration allows generating the list of suppliers that can be used for the subsequent steps of the method. Such a list may be constantly updated as a result of subsequent registrations by further suppliers.

Preferably, each supplier is associated with a certain qualification relating to its ability to carry out certain production processes, to produce or make certain production components of an article and to provide a certain component. For example, in the list of suppliers, there may be suppliers of gold components, precious stones or those who can assemble certain components or perform processing on them.

More preferably, each supplier can also be assigned a feedback value associated with previously completed jobs, taking into account, for example, the quality of the component made, lead time and shipping. Such feedback value can be assigned by the end-user as well as by operators associated with the central processing unit.

Preferably, step b) also includes providing a list of assembly centres that are specialised in assembling certain articles once received the production components from the suppliers. As for suppliers, the list of assembly centres is provided to the central processing unit preferably to the database and can be constantly updated.

The method 1 comprises a step c) of providing a management algorithm residing in a central processing unit configured to subdivide the realisation of an article according to the article and its customisation to one or more suppliers in the list of suppliers. Specifically, the central processing unit located in an operative site is configured to run the management algorithm. In detail, the central processing unit includes a database wherein the lists of articles and lists of suppliers accessible by the management algorithm to perform the following steps and preferably the list of assembly centres are stored.

Preferably, the management algorithm is a neural network-based algorithm trained to sort articles according to articles and their customisation, select suppliers from the supplier list according to production components and production processes, define a production line and coordinate the production of the selected article. Preferably, the algorithm is also configured to select assembly centres according to the articles to be made.

The method 1 comprises a step d) of selecting and customising an article from the list of articles by means of a user interface in communication with the central processing unit. Specifically, the user interface comprises a web page or application accessible via a fixed (computer) or mobile device (smartphone or tablet) in signal communication with the central processing unit. In this case as well, access to the user interface can be performed following a registration by the user.

From the user interface, the user, in this case the jeweller, can select one or more articles of interest and customise them according to the article itself. Preferably, step d) includes selecting an article from the list of articles, a category from the list of categories associated with the selected article, a sub-category from the list of sub-categories associated with the selected category and one or more specifications from the list of specifications according to the selected article.

Preferably, step d), following the selection and customisation of one or more articles, includes confirming the purchase order. It should be noted that on the user interface the management algorithm, taking into account the user's order, communicates the timing and final cost of the order.

Specifically, step d) includes a step d1) of confirming the purchase order by the user, d2) of paying the order by credit card, bank transfer or grant and d3) of generating a signal of payment made to be sent to the central processing unit so as to start the subsequent steps of production and realisation of the one or more articles.

The method 1 comprises the step e) of subdividing by means of the management algorithm the selected and customised article into one or more production components and/or into one or more production processes. It should be noted that, for the purposes of the present invention, a production component means a raw material such as, for example, gold or silver to be processed and semi-finished products such as, for example, metal filaments to be bent.

For ease of explanation, the steps of the method in case only one article is selected and customised in step d) are hereinafter described. It should be noted that the steps can also be applied in case several articles are selected and customised by a plurality of users.

Preferably, step e) comprises the step e1) of identifying in the selected article one or more production components that can be made separately, the assembly of which comprises the selected article. Specifically, the management algorithm, following the selection and customisation steps, determines and identifies all the possible production components of the subject article that can be made and/or assembled separately. For example, the selection step has led to select diamond earrings with flush claws, where the diamond has a certain carat, colour and purity. The management algorithm allows to subdivide earrings into individual diamond production components, diamond support, stem and closing element.

Such identification of the production components is made by accessing the database associated with the central processing unit wherein characteristics of the articles have been provided. Preferably, the neural network-based management algorithm recognises all the possible production components of the selected article.

Step e) comprises the step e2) of identifying in the selected article one or more production processes, according to the customisation, that are required to make one or more identified production components and/or at least partial assembly thereof. Specifically, the management algorithm identifies the production processes to be performed on one or more identified production components such as processing or partial assembly steps. Returning to the previous example of earrings, the management algorithm may define a production step of curling the ends of the closing element (to obtain the back clasps) or a production step of bending the diamond support element or a production step of partially assembling the diamond with the relative support.

Such an identification of production processes is made by accessing the database associated with the central processing unit where product characteristics have been provided as in step e1). Preferably, the neural network-based management algorithm recognises all the possible production processes associated with the selected article, also according to the subdivision into production components.

The method 1 comprises the step f) of defining a production line for the selected article according to the production components and production processes and suppliers of the supplier list and preferably according to the assembly centres. Specifically, the production line includes defining an order for producing/making the production components/production processes to be performed in order to produce and assemble the selected and customised article. In detail, step f) includes subdividing the production/realisation of the production components/production processes among one or more suppliers so as to produce/realise production components/production processes in parallel among several suppliers and/or in series if certain production components/production processes must or can be made at a later date, requiring previously completed production components/production processes or longer lead times.

In other words, step f) includes organising and coordinating suppliers and the production process, taking into account the subdivision of the article.

Advantageously, the method 1 allows suppliers to work as coordinated by the system, which communicates them the production components to be produced, to whom they are to be sent and from whom they are to be received, and which production processes are to be carried out.

According to a preferred embodiment, step f) comprises the step f1) of identifying one or more suppliers from the list of suppliers to whom the production of one or more production components and/or the execution of one or more production processes are to be assigned. Besides being based on the information of the relative suppliers provided during the registration step and present in the database, the identification step may also be based on the feedback value associated with each supplier. Specifically, the management algorithm, preferably based on neural networks, takes into account information available on the supplier and subdivision to identify the suppliers to whom the production of one or more production components and/or the execution of one or more production processes should be assigned. It should be noted that the management algorithm, preferably based on neural networks, can identify two or more suppliers to whom the production of one or more production components and/or the execution of one or more production processes can be assigned in case one or more suppliers reject the assignment.

Preferably, the step f) includes a step f2) of identifying an order of production of the production components and production processes according to the identified suppliers, production components and production processes. Specifically, step f2), as mentioned above, includes defining an order according to which the production components are to be produced and the production processes performed. In detail, defining the production order takes into account and defines an average completion time for producing a production component and performing the production process for each supplier. In addition, defining the production order also takes into account and defines the delivery time needed to ship a production component from one supplier to another and preferably also to an assembly centre.

Finally, step f) comprises a step f3) of defining guidelines to be followed by each identified supplier to whom the production of one of the production components and/or the realisation of one or more production processes has been assigned. Guidelines mean the steps that each supplier must follow to produce the relative production component and are preferably indicated and defined by the management algorithm, such as by the relative artificial intelligence.

The method comprises the step g) of selecting one or more suppliers from the list of suppliers according to the defined production line. Specifically, once the production line for the selected and customised article has been defined, the management algorithm selects the suppliers to whom the production of one or more production components and/or the realisation of one or more production processes as well as a job are to be assigned.

The method comprises the step h) of sending a job signal to each selected supplier representative of the production component to be made and/or the production process to be carried out according to the production line. Specifically, step h) includes sending the supplier interface in signal communication with the central processing unit the job signal so that each supplier can see in detail the production component to be made and/or the production process to be carried out on a production component. Preferably, step h) comprises a step of accepting or rejecting the job. In the first case, the supplier interface sends an acceptance confirmation signal to the central processing unit to start producing the article. In the second case, by contrast, the supplier interface sends a rejection signal to the central processing unit, which, by the management algorithm, defines a new production line, selects a new supplier replacing the one which rejected the job and sends the corresponding job signal. If necessary, the management algorithm sends further job signals to other suppliers according to the new production line, cancelling the previous job signals.

It should be noted that the job signal comprises information about the production component to be made and the production process to be carried out as well as any indications from whom to receive a production component or to whom to send it once a production process has been carried out. In addition, the job signal also comprises the average completion time within which the relative supplier must make the component and/or perform the production process as well as the time required for delivery.

According to a preferred embodiment, step h) includes using blockchain algorithms to send the job signal to the relative suppliers preferably by establishing a "smart contract" with the relative supplier.

The method includes step i) of making the production components and the production processes according to the defined production line. Depending on the j ob signal, each selected supplier makes the production component, performs the production process, sends the production component and/or receives a production component.

According to a preferred embodiment, step i) comprises the step i1) of producing and/or supplying the production component and/or performing the production process. Specifically, step i1) may include processing a raw material, such as gold or silver received from another supplier, and/or processing a semi-finished product to produce the relevant production component. In addition, step i1) may also include performing the production process on the raw material, semi-finished product or in general on the production component received to supply the production component on which the production process has been carried out. Subsequently, step i) includes a step i2) of sending the production component to an assembly centre. In alternative, step i) comprises step i3) of sending to a supplier of the list of suppliers the production component, prior to the assembly centre, to perform a production process and/or assemble it at least partially with one or more production components produced and/or supplied by the relative supplier and/or by other suppliers and send then to the relative supplier. Specifically, step i3) includes sending a production component to another supplier for further subsequent processing.

It should be noted that the job signal also comprises the receiving supplier or assembly centre to which the production component is to be sent as well as the sender supplier from which the production component is to be received. Preferably, the job signal also comprises the delivery time required from one supplier to another and from the supplier to the assembly centre.

It should be noted that steps i1), i2) and i3) can be made by any supplier to whom the job signal has been sent.

Preferably, step i) includes sending the supplier interface a pre-filled shipping document to be associated with the shipment of the production component to another supplier or to the assembly centre.

The method 1 comprises the step 1) of assembling the production components to produce the selected article in an assembly centre. Specifically, production components made by the suppliers are shipped to a relative assembly centre where the final assembly takes place. Preferably, the assembled article is submitted to quality controls, such as a quality control centre associated with the operational site before been delivered to the user who ordered it.

It should be noted that the method includes a list of assembly centres specialised in assembling certain articles, such as for watchmaking or packaging articles or jewellery articles. The management algorithm selects the assembly centre suitable for the article and sends the relative selected suppliers the address associated with the selected assembly centre.

According to a preferred embodiment, the method comprises a step m) of shipping the assembled article to the user who has selected the article. Specifically, step m) includes sending to the user by means of the user interface an estimate of the final delivery time according to the production line defined for the article. In detail, following the selection and customisation of an article, the management algorithm, thanks to the definition of the production line, calculates an estimate of the final delivery time to the user. The final delivery time to the user is given by the sum of the average completion time of the production components/production processes, the necessary delivery time between the various suppliers, the necessary delivery time of the production components from the suppliers to the assembly centre and the necessary delivery time from the assembly centre to the user.

Preferably, the final delivery time to the user of an order of articles of the same type coincides with the expected final delivery time to the user of the single article taking the longest time among those ordered.

It should be noted that different types of articles (e.g. jewellery, watches, goldsmiths) may include different assembly centres from which they are shipped to the user and therefore different delivery times.

Preferably, the method includes a step of monitoring the production line of the selected article. In detail, the monitoring step allows the user who placed the order to follow the production of the selected article step by step. It should be noted that the monitoring step allows operators associated with the central processing unit to follow step by step the production of each individual article selected by the users as well as the management algorithm to notify the user and operators of any delays on the production line of the selected and customised article.

More preferably, the monitoring step comprises a step of generating a progress signal for each supplier according to an execution status of the production component and/or of the production process associated with the relevant supplier. Specifically, each supplier can generate a progress signal via the supplier interface in communication with the central processing unit in which execution statuses are selectable, e.g. a production start status, production end status, status of receipt of a component from another supplier and status of shipment and/or delivery of a production component to another supplier or to the relative assembly centre. Subsequently, the monitoring step includes a step of sending the progress signal to the central processing unit. Finally, the monitoring step comprises a step of generating a production status signal of the selected article according to each progress signal received. Specifically, the production status signal allows to monitor the execution status of each individual component at each individual supplier.

Preferably, the step of generating a production status signal includes making the production status available to the user by the relative user interface.

It should be noted that the monitoring step is also carried out for the assembly centre, which generates and sends a progress signal according to an execution status based on the receipt of production components, assembly and shipment of the assembled article.

Advantageously, the monitoring step allows to evaluate possible delays and the production status in real time.

More preferably, the monitoring step also includes checking and notifying the user and the operators of the central processing unit as well as the management algorithm of the delivery status of the article from the assembly centre to the user by placing a courier in signal communication, using known techniques, with the central processing unit and the user interface.

It is a further object of the present invention to provide a system for producing jewellery articles configured to perform the previously described method. The system comprises a management algorithm. This is configured to coordinate the method steps d) to m) so as to subdivide the selected articles, define the production line, select suppliers and coordinate them between each other with the job signal as well as manage the assembly and delivery steps.

The system comprises a central processing unit configured to run the management algorithm. Preferably, a database is associated with the central processing unit where the lists of articles and suppliers are stored. More preferably, lists of assembly centres are also stored in the database.

The system also comprises user interfaces, in signal communication with the central processing unit and configured to select and customise one or more articles. The user interfaces are preferably associated with a fixed or mobile device and are set up as web pages and/or applications. It should be noted that the user interface comprises a virtual shop window typical of the e-commerce and marketplace field. Each user can access the user interface after registration.

The system also comprises one or more suppliers configured to produce a production component and/or perform a production process. Preferably, suppliers are also configured to send the manufactured production components to another supplier and/or assembly centre. According to a preferred embodiment, each supplier is associated with a supplier interface in signal communication with the central processing unit and configured to receive the job signal and generate and send the progress signal.

The system comprises one or more assembly centres configured to receive the production components produced and assemble the selected article. Preferably, the assembly centres are also configured to send the assembled articles to the relative users.

According to a preferred embodiment, the system comprises one or more quality control centres configured to perform a quality check on the article set about before it is sent to the relative user.

## Claims

1. Method (1) for making articles intended for jewellery shops according to a user's preferences, the method (1) comprising the steps of:
a) providing a list of articles that can be selected and customised by a user;
b) providing a list of suppliers of articles;
c) providing a management algorithm residing in a central processing unit configured to subdivide the realisation of an article according to the article and its customisation to one or more suppliers in the list of suppliers;
d) selecting and customising an article from the list of articles by means of a user interface in communication with the central processing unit;
e) subdividing the selected and customised article into one or more production components and/or into one or more production processes by means of the management algorithm;
f) defining a production line for the selected article, according to the production components and the production processes and the suppliers on the list of suppliers;
g) selecting one or more suppliers from the list of suppliers according to the defined production line;
h) sending a job signal to each selected supplier representative of the production component to be made and/or of the production process to be carried out according to the production line;
i) making the production components and the production processes according to the defined production line;
l) assembling the production components to produce the selected article in an assembly centre.

2. The method (1) according to claim 1, wherein step e) comprises the steps of:
e1) identifying in the selected article one or more production components that can be made separately, the assembly of which comprises the selected article;
e2) identifying in the selected article one or more production processes according to the customisation that are required to make one or more identified production components and/or at least partial assembly thereof.

3. The method (1) according to claim 1 or 2, wherein step f) comprises the steps of:
f1) identifying one or more suppliers from the list of suppliers to whom the production of one or more production components and/or the execution of one or more production processes are to be assigned;
f2) identifying a production order for the production components and the production processes according to the identified suppliers, production components and production processes;
f3) defining guidelines to be followed by each identified supplier to whom the production of one of the production components and/or the execution of one or more production processes has been assigned.

4. The method (1) according to claim 1 or 2, wherein, step i) comprises the steps, made by each supplier to whom the job signal has been sent, of:
i1) producing and/or supplying the production component;
i2) sending the production component to an assembly centre; or
i3) sending the production component before the assembly centre to a supplier of the list of suppliers to carry out a production process and/or assemble it at least partially with one or more production components produced and/or supplied by the respective supplier and/or by other suppliers and sent to the relative supplier.

5. The method (1) according to any one of claims 1 to 4 wherein the management algorithm is a neural network-based algorithm trained to subdivide articles according to the articles and their customisation, select suppliers from the list of suppliers according to the production components and the production processes, define the production line and coordinate the production of the selected article.

6. The method (1) according to any one of claims 1 to 5, wherein the method in step a) comprises the steps of:
a1) providing a list of articles;
a2) providing a list of categories for each article in the list of articles;
a3) providing a list of sub-categories for each category in the list of categories selectable by a user;
a4) providing a list of specifications for each article.

7. The method (1) according to claim 6, wherein step d) comprises selecting:
- an article from the list of articles;
- a category from the list of categories associated with the selected article;
- a sub-category from the list of sub-categories associated with the selected category;
- one or more specifications from the list of specifications according to the selected article.

8. The method (1) according to any one of claims 1 to 7, wherein the method (1) comprises a step of monitoring the production line of the selected article comprising the steps of:
- generating a progress signal for each supplier according to an execution status of the production component and/or of the production process associated with the relative supplier;
- sending the progress signal to the central processing unit;
- generating a production status signal for the selected article according to each progress signal received.

9. The method (1) according to any one of claims 1 to 8, wherein the method (1) comprises a step m) of shipping the assembled article to the user who has selected the article, the shipping step includes sending to the user by means of the user interface an estimate of the final delivery time according to the production line defined for the article.

10. Jewellery article production system configured to perform the method according to any of claims 1 to 9, the system comprising:
- a management algorithm;
- a central processing unit configured to run the management algorithm;
- user interfaces in signal communication with the central processing unit and configured to select and customise one or more articles;
- one or more suppliers configured to produce a production component and/or to execute a production process;
- one or more assembly centres configured to receive the production components produced and assemble the selected article.
